# EUROPEAN PATENT SPECIFICATION

(11) **EP 4 524 842 B1**
(45) Date of publication and mention of the grant of the patent: **31.12.2025**
(21) Application number: 24200216.0
(22) Date of filing: 13.09.2024
(51) Int. Cl.: G06Q 10/04, G06Q 10/08

(54) **IMPROVED PLANNING METHOD FOR COOKING FOOD**
VERBESSERTES PLANUNGSVERFAHREN ZUM KOCHEN VON LEBENSMITTELN
PROCÉDÉ DE PLANIFICATION AMÉLIORÉ POUR LA CUISSON D'ALIMENTS

(30) Priority: 18.09.2023 IT 202300019101
(43) Date of publication of application: 19.03.2025
(73) Proprietor: Moretti Forni S.p.A., 61037 Mondolfo (PU) (IT)
(72) Inventor: MORETTI, Mario, 61121 PESARO (PU) (IT)
(74) Representative: Ripamonti, Enrico

(56) References cited:
- ES-U- 1 297 344
- US-A1- 2019 303 817
- US-A1- 2020 242 680

## Description

The present invention relates to an improved planning method for cooking food.

More in particular, the present invention relates to an improved planning method for cooking food and, still more in particular, leavened cooking products such as pizza, pastry, bakery products and the like.

The cooking process of foods and, more specifically, the cooking process of leavened foods is a complex process which, over time, has been subject to continuous evolution. ES 1 297 344 U refers to a vending machine for baked food at the moment, such as pizzas or empanadas. US 2020/242680 A1 relates to management and preparation of food. US 2019/303817 A1 relates to enterprise management and, more particularly, relate to the distribution of recipe or other food product related information associated with a particular asset in the context of a communication network.

Initially, the cooking process substantially comprised a single step defined, precisely, by the simple cooking of the food.

The development in the knowledge of the features of leavened products (for example, the greater knowledge of the raw materials) has then led to an evolution of the fermentation and maturation process of the product to be cooked and this not only to improve and optimize the quality of the product subjected to cooking, but also to improve and optimize the healthiness of the food itself (in particular the digestibility thereof), with such aspects having led the cooking process to a subdivision into distinct and sequential steps, thus benefiting an increase in production capacity with a decrease in cooking times and in the spaces of the points of sale, of the laboratories dedicated to pre-cooking and points of sale dedicated to the final cooking of the pre-cooked product by means of equipment with limited dimensions and easy installation.

One such evolution of the cooking processes makes it necessary to plan the cooking processes with the definition of the physical parameters characterizing the individual steps of cooking a food according to the individual piece of equipment used for the same.

Considering, by way of example, a traditional cooking planning situation which comprises a centralized preparation and cooking laboratory which pre-cooks foods to be routed to different points of sale variously located in the territory, an operator will have to program each individual piece of equipment for cooking the relative step taking into account a variety of different variables depending on the type of food to be cooked (e.g., white pizza, red pizza, garnish or toppings, etc.), the format of the food (e.g., round pizza, pan pizza, pizza peel, etc.), the pre-cooking and finishing technology (e.g., static oven, ventilated oven, combined oven, etc.), the storage of the pre-cooked product (e.g., ATM (modified atmosphere), ATP (protected atmosphere), frozen, etc.) and, therefore, such an operator will have to be a well-experienced operator in optimally setting such a multiplicity of cooking parameters.

However, since the operator of the preparation and cooking laboratory is of a different centralized type from that of the point of sale, good communication is necessary for such operators (different communication from time to time), with such communication which is not simple, considering the fact that the variables indicated above intersect each other.

Therefore, the traditional management of cooking processes is complex with reference to planning the cooking steps between the centralized preparation and cooking laboratory different from that of the point of sale.

Furthermore, the traditional management of cooking processes involves considerable downtime, given the fact that the cooking equipment of the points of sale tend to be always in operation even if not used (for example, the oven is always preheated) and, moreover, such an aspect leads to a consequent increase in energy consumption and, therefore, also of the related costs.

In addition, the traditional management of cooking processes does not allow to align or standardize the cooking processes between the centralized preparation and cooking laboratory and those of the points of sale. This is because, considering what has been described above, communication between such operators is complex (different communication from time to time), with such communication which is not simple.

The object of the present invention is to overcome the drawbacks set forth above.

More specifically, the object of the present invention is to provide an improved planning method for cooking food adapted to allow the complete cooking of a food to be divided into distinct sequential and related steps, allowing the cooking steps to be managed and controlled in an adaptive manner with particular reference to cooking in which the process is divided into pre-cooking and final cooking steps (or "refining").

A further object of the present invention is to provide an improved method for cooking food adapted to reduce downtime in the use of cooking equipment.

It is a further object of the present invention to provide an improved method for cooking food adapted to allow easy management of unforeseen events (such as sudden failures or malfunctions or the like).

A further object of the present invention is to provide an improved method for cooking food adapted to allow a reduction in energy consumption and a consequent reduction in related costs.

A further object of the present invention is to provide an improved method for cooking food adapted to allow a standardization of the cooking processes and, therefore, a replicability thereof.

A further object of the present invention is to provide an improved method for cooking food adapted to allow the use of inexperienced personnel with reference to the cooking processes of the final points of sale and which, in addition, makes communication between the centralized preparation and cooking laboratory and the point of sale laboratories easier.

A further object of the present invention is to provide users with an improved planning method for cooking food adapted to ensure high reliability and duration over time and furthermore, such as to be easily and economically made.

These and other objects are achieved by the invention having the features referred to in claim 1.

According to the invention, a perfected planning method for cooking food is provided, especially for leavened cooking products such as pizza, pastry, bakery products and the like, comprising a pre-cooking step carried out in one or more pre-cooking laboratories and a final cooking step (or refining) carried out in one or more points of sale that are distinct from the cooking laboratories, said steps in bidirectional communication with a cloud system for storing and processing the signals of cooking equipment referred to in the pre-cooking and final cooking steps.

Advantageous embodiments of the invention arise from the dependent claims.

The constructive and functional characteristics of the improved planning method for cooking food of the present invention can be better understood from the detailed description that follows, in which reference will be made to the attached drawing tables that illustrate a preferred and non-limiting embodiment and in which:
figure 1 illustrates a general diagram of the improved planning method for cooking food of the invention;
figure 2 illustrates a functional diagram of the improved planning method for cooking food.

With reference to the aforementioned figures, the improved planning method for cooking food 10 of the present invention consists, overall, in a planning of the cooking process which comprises a planning upstream of the distinct cooking steps, represented by "pre-cooking" 12 and "final cooking" 14, which uses a data processing and storage means defined by a cloud system 16, preferably of a horizontal or similar type, provided with data processing algorithms as better defined below.

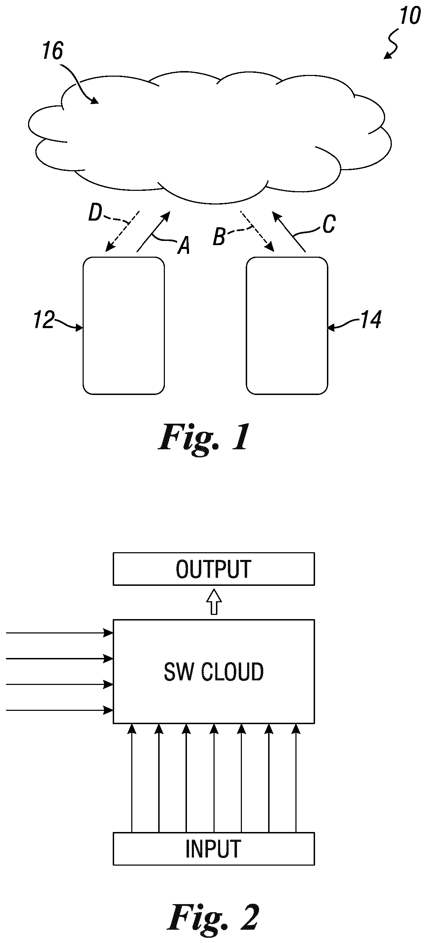

More in particular, input data related to the operating devices in the pre-cooking step 12 (which can be defined by one or more pre-cooking laboratories) are transmitted (as indicated by the arrow "A" in solid line and by the arrow "B" in dashed line in figure 1) to operating devices (which are defined by one or more points of sale which carry out the final cooking or refining) during the final cooking step 14 (or refining) through the aforementioned cloud system 16 which, in turn, transmits return signals to the cloud system 16 (as indicated by the arrow "C" in solid line and by the arrow "D" in dashed line in figure 1) indicative of the progress of the final cooking step 14, with said return signals to the pre-cooking step 12 which are functional to an adaptive planning of a subsequent cooking step.

The transmission of return signals from the final cooking step 14 to the pre-cooking step 12 is carried out by means of sensors (signals related to temperature, vents (linked, for example, to openings of the oven doors during the heating thereof or during the cooking of food), steam, time, heating resistors, thermocouples, humidity, etc.) with which the cooking devices referred to in the final cooking step 14 are provided.

The pre-cooking step 12 and the final cooking step (or refining) 14 are implemented in an "accordion" manner (i.e., the input data from the pre-cooking step 12 are used by the final cooking step 14 and the output data from the final cooking step are used by the pre-cooking step 12 for an adjustment thereof and a consequent adjustment of the final cooking step) and this in order to always ensure a 100% cooking percentage, i.e., complete, on the basis of an equivalence defined by: *%COOKING* = % *PRE-COOKING +* % *REFINING =* 100%

During the pre-cooking step 12 the operating devices in this step continuously send return signals to the cloud system 16 which processes and continuously updates them with output signals in the direction of the final cooking devices of the final cooking step 14 (or refining), with the return signals being processed and updated on the basis of signals from the final cooking step.

By way of example, considering a planning which envisages a 70% pre-cooking of a pizza-type food in a pan, seasoned with tomato sauce and cooked in a static oven with a final cooking (or refining) of 30% in a ventilated oven and with said final cooking prepared on the basis of specific cooking parameters (temperature, cooking time and cooking schedules), if there is any deviation with reference to the planned cooking procedure, the oven device referred to in the pre-cooking step sends signals and data continuously to the cloud system 16 (signals detected by means of dedicated sensors), with said signals being processed to generate return signals in the direction of the final cooking (or refining) step to give rise to an adaptation of the devices of such a step as a function of new and varied cooking needs.

The planning method of the invention can be implemented in hardware devices of the personal computer or tablet or smartphone type or further mobile devices in the areas where the machine fleet is loaded for cooking and, by means of such devices, all the data related to the cooking of the products such as the schedules, the cooking parameters (temperature, humidity, cooking time), the production quantities, etc., are assigned with the assignment of said cooking data which occurs upstream of the cooking process.

The planning method of the invention is further disclosed below with reference to, for example, application and, more in particular, with reference to the planning of the production of 70% white (i.e., unseasoned) and pre-cooked pizza bases and then stored in a modified atmosphere at room temperature and finished cooking and filling, depending on the needs of the points of sale, within twenty-four hours.

Based on the production needs, the fleet of cooking machines, the manpower, the available energy, etc., a pre-cooking production (the pre-cooking step 12) of six hours is configured with one half of pre-cooked bases in a static oven (of the type with two cooking chambers and which envisages the constant presence of an operator adapted to carry out the loading and unloading operations of said pizza bases) and with the remaining half of pre-cooked pizza bases in a ventilated oven (of the type with one cooking chamber and which does not require the constant presence of an operator).

Through the use of pre-set pre-cooking programs with cooking timer, the sensors with which the oven is equipped (both the static and the ventilated oven) continuously send data and information to the cloud system 16 regarding the production status, the possible openings of the oven door(s), the temperature from which the information regarding speed of variation over time is extrapolated in reference to the heating loads, the presence of the product in the cooking chambers and, in addition, data detected by magnetic, inductive and other sensors suitable to provide data indicative of productivity.

If an operator (for example, the operator responsible for the static oven) is unexpectedly absent and, therefore, an unforeseen decrease in the workforce should occur, the sensors with which the furnaces are equipped would detect a decrease in production with the consequent need for a reprogramming of the production cycle on the basis of pre-established hierarchies which, in the case referred to in the present example, would determine the switching on of a second chamber of the ventilated oven (which does not require the constant presence of an operator) until the restoration of the pre-established and required production rhythm; however, such an intervention would still result in a delay in the pre-cooking step which would end with a delay of one hour with respect to the time initially established.

Such information detected by the sensors, as disclosed previously, is constantly sent to the cloud system 16 which processes such information and, in turn, transmits information and corrective data to the cooking devices located at sites (points of sale) on the territory and operating in the final cooking step 14 (or refining) and programmed to complete the cooking of the product within a predefined time originally.

In light of the corrective information from the cloud system 16, the equipment and devices of the final cooking step (or refining) will be switched on one hour earlier than originally planned in order to compensate for the delay referred to in the pre-cooking step 12.

However, if in one of the points of sale located in the territory (indicated, for example, as N3) a sudden interruption of the power supply which cannot be remedied occurs in a short time, an alteration in the cooking schedule will occur.

Also with reference to the final cooking step 14 (or refining), the equipment or devices constantly send data and information to the cloud system 16 which will process said data to define a new planning of the final cooking cycle (or refining) and assuming that, if cooking problems arise which that cannot be remedied quickly, the location of production in a point of sale (for example, indicated with N4) adjacent to the point of sale subject to malfunction or failure has been assigned as a priority, the cooking equipment or devices of such a point of sale N4 will be set on more performing cooking parameters (for example, increase in cooking temperature and/or product handling speed or the like) in order to meet the requests for an increase in production.

Figure 2 illustrates what has been described with reference to the planning of the pre-cooking of the pizza bases and the final cooking referred to in the disclosed example.

As it can be seen from the foregoing, the advantages achieved by the improved planning method for cooking food of the present invention are evident.

The planning method of the invention advantageously allows to manage upstream production by adaptively planning all cooking steps remotely by means of a computer or tablet or smartphone device or similar mobile device.

A further advantage of the method of the invention is that it allows a reduction in downtime and this in that the pre-cooking or cooking equipment will only be active as long as the operation thereof is envisaged (for example, the equipment which is functional to the final cooking (or refining) is activated only when the cloud system sends it a signal related to the finished pre-cooking step and, if the pre-cooking is delayed, then the final cooking equipment, receiving a signal from the cloud system, will not be activated in light of the original timing, but in accordance with the delay detected for pre-cooking or, as in the example disclosed above, the method could envisage the activation of equipment other than that referred to in the original schedule or could envisage the use of cooking parameters which are different from the original ones or, again, the use of more "aggressive" cooking parameters with respect to the original ones and all this in order to compensate for the delay in the pre-cooking step).

A further advantage of the planning method of the invention is that it allows an optimal management of unexpected events and this by virtue of the fact that, constantly and continuously, signals related to the operation of the equipment are sent by the pre-cooking equipment and by the final cooking or refining equipment to the cloud system which acquires and processes them to "compensate" for any faults, and the like, both towards the pre-cooking and final cooking step.

A further advantage of the method of the invention is that the adaptive planning which characterizes it allows energy savings, also considering the fact that the equipment can be activated in a "rotary" manner so as to cut any peaks in energy consumption.

A further advantage of the planning method of the invention is represented by the fact that the data sent during the pre-cooking step and those sent during the final cooking (or refining) step are processed by the cloud system which can also use them at a statistical level for an improved management of suppliers of raw materials, consumption, production docks, production times, cost and sales analysis and the like.

A further advantage of the planning method of the invention is that it allows a standardization of the cooking processes of the food (pre-cooking and final cooking or refining) and, in addition, allows a replicability of the features of the cooked food and this in favour of an optimized quality thereof.

A further advantage of the planning method of the invention is represented by the fact that on the one hand, it allows a reduction in the professionalism of the operator dedicated to the equipment that can focus on loading and unloading the products thanks to the programming upstream of the cooking and, on the other hand, allows an increase in employment by virtue of the fact that the operator becomes a sort of logical-productive programmer within the production cycle. Although the invention has been described above with particular reference to an embodiment given merely by way of non-limiting example, numerous modifications and variations to the method of the invention will be apparent to a person skilled in the art in the light of the above description. The present invention, therefore, is intended to encompass all modifications and variations within the scope of the following claims.

## Claims

1. An improved planning method for cooking food, especially for leavened cooking products such as pizza, pastry, bakery products and the like, comprising a pre-cooking step (12) carried out in one or more pre-cooking laboratories and a final cooking step (14) (or refining) carried out in one or more points of sale which are distinct from the cooking laboratories, said steps in bidirectional communication with a cloud system (16) for storing and processing the signals of cooking equipment referred to in the pre-cooking and final cooking steps, the input data related to operating devices in the pre-cooking step (12) being transmitted to operating devices during the final cooking step (14) (or refining) through the cloud system (16), with said latter devices, in turn, transmitting return signals to the cloud system (16) indicative of a state of progress of the final cooking step (14) and with said return signals to the pre-cooking step (12) which are functional to a planning of a subsequent pre-cooking and final cooking step.

2. The method according to claim 1, **characterized in that** the cloud system (16) is of the horizontal type.

3. The method according to claim 1 or 2, **characterized in that** the planning of the pre-cooking (12) and final cooking (14) (or refining) steps is carried out upstream thereof.

4. The method according to the preceding claims, **characterized in that** the planning of the pre-cooking (12) and final cooking (14) (or refining) steps is of the adaptive type.

5. The planning method according to the preceding claims, **characterized in that** the transmission of signals from the final cooking step (14) to the pre-cooking step (12) and vice versa through the cloud system (16), is carried out continuously by means of sensors with which the cooking devices of said steps are provided.

## Patentansprüche

1. Ein verbessertes Planungsverfahren zum Kochen von Lebensmitteln, insbesondere für gesäuerte Kochprodukte, wie beispielsweise Pizza, Gebäck, Backwaren und dergleichen, umfassend einen Vorkochschritt (12), der in einem oder mehreren Vorkochlabors durchgeführt wird, und einen Abschlusskochschritt (14) (oder Verfeinerung), der in einer oder mehreren Verkaufsstellen durchgeführt wird, die von den Kochlabors getrennt sind, wobei die Schritte in bidirektionaler Kommunikation mit einem Cloud-System (16) zum Speichern und Verarbeiten der Signale von Kochgeräten, auf die sich der Vorkoch- und Abschlusskochschritt beziehen, wobei die Eingangsdaten, die sich auf Betriebsvorrichtungen in dem Vorkochschritt (12) beziehen, über das Cloud-System (16) während des Abschlusskochschritts (14) (oder der Verfeinerung) an die Betriebsvorrichtungen übertragen werden, wobei die letztgenannten Vorrichtungen ihrerseits Rücksignale an das Cloud-System (16) übertragen, die indikativ für einen Fortschrittszustand des Abschlusskochschritts (14) sind, und wobei die Rücksignale an den Vorkochschritt (12) funktional für eine Planung eines nachfolgenden Vorkoch- und Abschlusskochschritts sind.

2. Verfahren nach Anspruch 1, **dadurch gekennzeichnet, dass** das Cloud-System (16) von einem horizontalen Typ ist.

3. Verfahren nach Anspruch 1 oder 2, **dadurch gekennzeichnet, dass** die Planung des Vorkoch- (12) und Endkochschritt (14) (oder Verfeinerung) stromaufwärts davon durchgeführt wird.

4. Verfahren nach den vorherigen Ansprüchen, **dadurch gekennzeichnet, dass** die Planung des Vorkoch- (12) und Endkochschritt (14) (oder Verfeinerung) von dem adaptiven Typ ist.

5. Verfahren nach den vorherigen Ansprüchen, **dadurch gekennzeichnet, dass** die Übertragung von Signalen von dem Abschlusskochschritt (14) zu dem Vorkochschritt (12) und umgekehrt durch das Cloud-System (16) kontinuierlich mittels Sensoren durchgeführt wird, mit denen die Kochvorrichtungen der Schritte versehen sind.

## Revendications

1. Procédé amélioré de planification de la cuisson d'aliments, en particulier des produits de boulangerie-pâtisserie tels que les pizzas, les pâtisseries, les produits de boulangerie et similaires, comprenant une étape de pré-cuisson (12) réalisée dans un ou plusieurs laboratoires de pré-cuisson et une étape de cuisson finale (14) (ou affinage) réalisée dans un ou plusieurs points de vente distincts des laboratoires de cuisson, lesdites étapes étant en communication bidirectionnelle avec un système cloud (16) destiné au stockage et au traitement des signaux des équipements de cuisson mentionnés dans les étapes de pré-cuisson et de cuisson finale, les données d'entrée relatives aux dispositifs de fonctionnement dans l'étape de pré-cuisson (12) étant transmises aux dispositifs de fonctionnement pendant l'étape de cuisson finale (14) (ou affinage) par l'intermédiaire du système cloud (16), lesdits derniers dispositifs transmettant à leur tour des signaux de retour au système cloud (16) indiquant l'état d'avancement de l'étape de cuisson finale (14) et lesdits signaux de retour à l'étape de pré-cuisson (12) servant à planifier une étape de pré-cuisson et de cuisson finale ultérieure.

2. Procédé selon la revendication 1, **caractérisé en ce que** le système cloud (16) est de type horizontal.

3. Procédé selon la revendication 1 ou 2, **caractérisé en ce que** la planification des étapes de pré-cuisson (12) et de cuisson finale (14) (ou affinage) est effectuée en amont de celles-ci.

4. Procédé selon les revendications précédentes, **caractérisé en ce que** la planification des étapes de pré-cuisson (12) et de cuisson finale (14) (ou affinage) est de type adaptatif.

5. Procédé de planification selon les revendications précédentes, **caractérisé en ce que** la transmission des signaux de l'étape de cuisson finale (14) à l'étape de pré-cuisson (12) et vice versa via le système cloud (16) est effectuée en continu à l'aide de capteurs dont sont équipés les appareils de cuisson desdites étapes.
